# EUROPEAN PATENT SPECIFICATION

(11) **EP 1 679 829 B1**
(45) Date of publication and mention of the grant of the patent: **21.02.2007**
(21) Application number: 05290030.5
(22) Date of filing: 05.01.2005
(51) Int. Cl.: H04L 12/28

(54) **Method to configure a DSL connection in which a home IP plug controller is enabled to initialize a communication with a home IP plug**
Verfahren zur Konfiguration einer DSL-Verbindung in welcher eine Home-IP-Plug-Steuerung aktiviert ist, um eine Kommunikation mit einem Home-IP-Plug einzuleiten
Procédé de configuration d'une connexion a DSL dans lequel un controleur de "home IP plug" est activé pour commencer une communication avec un "home IP plug"

(43) Date of publication of application: 12.07.2006
(73) Proprietor: ALCATEL, 75008 Paris (FR)
(72) Inventor: Bouchat, Christele, 2060 Antwerpen (BE); Van Den Bosch, Sven, 9080 Lochristi (BE); De Clercq, Jeremy, 9051 Sint-Denijs-Westrem (BE)
(74) Representative: Rausch, Gabriele

(56) References cited:
- US-A1- 2002 023 160
- J. DE CLERCQ ET AL.: "Introducing the Home IP Plug Controller (HIPP-C)" ALCATEL TECHNOLOGY WHITE PAPER, [Online] 5 October 2004 (2004-10-05), XP002321773 Retrieved from the Internet: URL:http://www.alcatel.com/com/en/appconte nt/apl/T0410-Home_Networking-EN_tcm172-814 61635.pdf> [retrieved on 2005-03-09]
- DSLHOME-TECHNICAL WORKING GROUP: "CPE WAN Management Protocol" DSL FORUM, May 2004 (2004-05), XP002316355
- DSLHOME-TECHNICAL WORKING GROUP: "Technical Report TR-046: Auto-Configuration Architecture and Framework" DSL FORUM, [Online] February 2002 (2002-02), XP002321774 Retrieved from the Internet: URL:http://www.dslforum.org/aboutdsl/Techn ical_Reports/TR-046.doc> [retrieved on 2005-03-09]

## Description

### Technical field:

The invention relates to a method to configure a connection between at least one Home Internet Protocol Plug and a Home Internet Protocol Plug Controller according to the specifying features of Claim 1.

### Background of the invention:

It is planned to provide new and better services via Digital Subscriber Line. These services require a communication between an Auto Configuration Server, ACS, located in an access network or in a core network and a Customer Premises Equipment, CPE, on the subscriber side. Both, the CPE and the ACS are connected via a Digital Subscriber Line, DSL, a Digital Subscriber Line Access Multiplexer, DSLAM, and the access network with each other. The communication shall allow the ACS to configure and to manage the CPE or any other end-user device that is Internet Protocol, IP, addressable, e.g. a DSL modem. In the following, IP addressable CPEs and other IP addressable end user devices will be subsumed under the term Home IP Plug, HIPP. The ACS and other similar devices will be subsumed under the term Home IP Plug Controller, HIPP-C.

To achieve a worldwide technical standard for providing these services, a standardization body, the DSL Forum Standardization Body, has been constituted to work on this purpose.

The DSLHome working group, from the DSL Forum standardization body, defines a new protocol, described in the Technical Report 87, TR87, allowing the configuration and management of HIPPs by the HIPP-C. In TR87, it is assumed that the HIPP has an IP address and contacts its HIPP-C.

Since the connection between the HIPP and the HIPP-C is asymmetric in a sense that if there is any Network Address Port Translation function, NAPT, or any Network Address Translation function, NAT, between the HIPP and the HIPP-C, or others such as firewalls and the like, it is only the HIPP that can take the initiative to initialize a communication between the HIPP and the HIPP-C because the HIPP has a private IP address and the HIPPC a public IP address.
Although that the opposite i.e. the HIPP-C initiating the contact with the HIPP is a known message in the CPE WAN-side Management Protocol according to TR87, it cannot be used due to the presence of such a NAPT and/or NAT function. Indeed, the NAPT is still ignorant regarding the entry translating the port and public IP address into the private IP address of the HIPP, i.e. ignorant regarding a communication in the direction HIPP-C towards HIPP initialized by the HIPP-C. Hereby, the initiative and the control of the HIPP configuration and management remains in the hands of the HIPP, as it is always the HIPP that can initiate the first message and by then properly configure the NAT entry.

In the Alcatel Technology White paper "Home Networking" , 2004-10-05 an architecture for a HIPP-C is described. The HIPP-C is used to be operated by a network access provider, the internet service provider etc. The information flow is normally asymmetric and the control of the linked HIPP is still in the hand of the HIPP.

In the report of DSL Technical Working Group "CPE WAN Management Protocol", DSL Forum 2004-05 a protocol is defined which allows a mechanism for securely enabling and disabling the CPE capabilities. The protocol provides an additional layer of security for optional capabilities.

### Technical purpose of the invention:

The technical purpose of the invention is to develop a method to configure a connection between a HIPP and a HIPP-C, in which connection a NAT and/or a NAPT function can be arranged between the HIPP and the HIPP-C and in which a communication between the HIPP and the HIPP-C can be initialized by the HIPP-C.

### Disclosure of the invention and its advantages:

The invention's technical purpose is fully met by said method to configure a connection between at least one Home Internet Protocol Plug, HIPP, located at a subscriber side and a Home Internet Protocol Plug Controller, HIPP-C, located in an access network, both connected via a Digital Subscriber Line, DSL, a Digital Subscriber Line Access Multiplexer, DSLAM, and the access network with each other, wherein at least a Network Address Port Translation function, NAPT, and/or at least a Network Address Translation function, NAT, takes place between the HIPP and the HIPP-C, which method is characterized by the steps:
acquisition of a HIPP information when a HIPP is going online, e.g. by the HIPP-C or by another network device like the DSLAM, in order to configure the NAT and/or the NAPT functions between the HIPP and the HIPP-C by the HIPP-C considering said HIPP information, wherein the HIPP information comprises at least a layer two address of the HIPP

- providing said HIPP information to the HIPP-C,
- configuration of at least the NAT and/or the NAPT functions between the HIPP and the HIPP-C by the HIPP-C considering said HIPP information, in order to receive a connection in which the HIPP-C is enabled to initialize a communication between the HIPP-C and the HIPP as long as the HIPP is online,
wherein the acquisition of the HIPP information, their providing to the HIPP-C and also the configuration of the NAT and/or NAPT functions by the HIPP-C takes place before the HIPP tries to contact the HIPP-C.

This invention allows the HIPP-C to correctly configure the NAT and/or NAPT functions or others in the HIPP/HIPP-C path in a way that full control of the HIPP is given to the HIPP-C. Furthermore the invention allows that even the very first message of the HIPP-C towards the HIPP can be initialized by the HIPP-C. Moreover the same HIPP information used to configure the NAT/NAPT functions between the HIPP and the HIPP-C improves the security by allowing to insert a simple mechanism to stop Denial of Services, DoS attacks.

Said method with the specifying features of Claim 1 has the advantage over the state of the art, that beside the simple mechanism of the basic idea of allowing the HIPP-C to configure NAT and/or NAPT functions in order to be able later on to contact the HIPP, the mechanism allows also the HIPP-C to set layer three filters against DoS attacks.

In a preferred embodiment of said invention, the connection is configured in a way that both, the HIPP and the HIPP-C can initialize a communication with each other.

In a preferred embodiment of said invention, an initialization of a communication with the HIPP-C is only possible for HIPPs whose HIPP information has been acquired and provided to the HIPP-C. Thereby an admission to initialize a communication between a HIPP and the HIPP-C by the HIPP is only granted e.g. for HIPPs registered at the HIPP-C with their HIPP information. The granting takes place by using the HIPP information being readily available to the HIPP-C. By this proceeding only HIPPs registered at the HIPP-C and being directly connected via a DSL line with the same access network in which the HIPP-C is located can initialize a communication with the HIPP-C. Another possibility is that filters are configured by the HIPP-C using the HIPP information, wherein the filters only allow the initialization of a communication by HIPPs whose HIPP information has been used to configure the filters. The HIPP information preferably comprises the Medium Access Control address, MAC address, of the HIPP. By using a registration at the HIPP-C or by using filters or by an analog proceeding it is possible to defeat a certain kind of Denial of Service Attacks on the HIPP-C.

In a preferred embodiment of said invention, at least one filter configured by the HIPP-C in consideration of the HIPP information governs the initialization of a communication by the HIPP with the HIPP-C. Thereby the configuration of the filter considers e.g. the Private IP Address of the HIPP known by the HIPP-C, the DSL line information provided to the HIPP-C by the DSLAM, the MAC address of the HIPP, or a combination of all. Preferably the filter is also configured by the HIPP-C before the HIPP tries to contact the HIPP-C.

In a preferred embodiment of said invention, the filter is a layer three filter.

In another preferred embodiment of said invention, the layer three filter is located in the DSLAM.

In another preferred embodiment of said invention, the layer three filter is located in a layer three network element, e.g. an IP forwarder.

In another preferred embodiment of said invention, the HIPP information provided to the HIPP-C comprises at least the Private Internet Protocol Address of the HIPP. The Private IP Address can be acquired e.g. by snooping.

In another preferred embodiment of said invention, the layer two address of the HIPP comprised in the HIPP information provided to the HIPP-C comprises at least the Medium Access Control address of the HIPP.

In an additional preferred embodiment of said invention, at least the layer two address is provided to the HIPP-C by the DSLAM.

In an additional preferred embodiment of said invention, the HIPP information comprises at least the related DSL line information.

In a particularly preferred embodiment of said invention, at least the DSL line information is provided to the HIPP-C by the DSLAM.

### Brief description of the drawing, with

- Figure 1: showing a scheme of a topology of a connection between a HIPP and a HIPP-C with NAPT functions and DHCP relays located between the HIPP and the HIPP-C, and
- Figure 2: showing a scheme of the procedure of the method according to the invention.

### Paths for performing the invention:

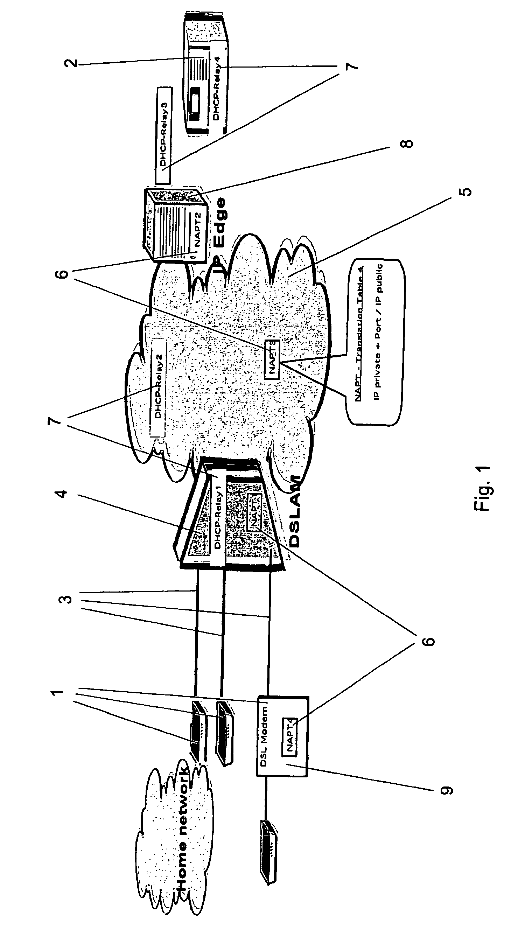

As shown in Figure 1, a Home IP Plug 1, HIPP is physically connected with a Home IP Plug Controller 2, HIPP-C via a Digital Subscriber Line 3, DSL, a Digital Subscriber Line Access Multiplexer 4, DSLAM and an access network 5 in which the HIPP-C 2 is located. Between the HIPP 1 and the HIPP-C 2 at least one Network Address Port Translation, NAPT, function 6 is arranged. Figure 1 shows four different potential places for the NAPT function 6 arranged between the HIPP 1 and the HIPP-C 2. One possible place is within the DSLAM 4, another at an IP Edge 8 of the access network 5, a third within the access network 5 and a fourth within a DSL modem 9 at the subscriber side. There is also at least one Dynamic Host Configuration Protocol Relay 7, DHCP Relay located between the HIPP 1 and the HIPP-C. Figure 1 also shows possible places for the DHCP Relay 7 between the HIPP 1 and the HIPP-C 2. A first place for the DHCP Relay 7 is within the DSLAM 4, a second within the access network 5, a third at the IP Edge 8 and a fourth within the HIPP-C. Additionally a firewall (not shown) can be arranged between the HIPP 1 and the HIPP-C 2. To enable the HIPP 1 and the HIPP-C 2 to communicate with each other, the physical connection has to be configured.

In the auto-configuration process described in TR46 in DSL Forum, the HIPP 1 gets its IP address, by whatever means: Point to Point Protocol Internet Protocol Control Protocol, PPP IPCP, DHCP, or static IP.

Particularly to enable the HIPP-C 2 to initialize a communication with the HIPP 1 if there is a NAPT function 6 between the HIPP 1 and the HIPP-C 2, the NAPT function 6 has to be configured in a certain kind.

The idea according to the invention is that the HIPP-C 2 gets informed that a HIPP 1 is on-line before the HIPP 1 tries to contact the HIPP-C 2. Once the HIPP 1 is on-line, the configuration of the layer 1 and layer 2 is available.
The DSLAM 4 is the first device that has the information about the layer two address of the HIPP 1, further called HIPP information. Most likely the HIPP information comprises the Media-Access-Control address, MAC address, and the related DSL line information also known by the DSLAM 4. The DSLAM 4 then informs the HIPP-C 2 that a new HIPP 1 is on-line, and provides the related HIPP information concerning this HIPP 1 to the HIPP-C 2.

The related HIPP information is acquired by snooping the Private-IP-address of the HIPP 1 from the actual used IP-address assignment protocol such as from the DHCP or PPP protocols. As well for DHCP as for PPP a relay agent can execute this snooping. The HIPP information has to be brought to the attention of the HIPP-C 2. This can be done by enabling such an agent to forward this information to the HIPP-C 2 or by including such an agent in the HIPP-C 2. Furthermore, the HIPP-C 2 has now the needed information to correctly configure the potential NAPT functions 6 that lay between the HIPP-C 2 and the HIPP 1. Doing so, the HIPP-C 2 is now able to take fully control of the HIPP 1 and to take the initiative to latter contact this.

Furthermore the invention improves the security of auto configuration services in which a HIPP-C 2 is managing and configuring at least one HIPP 1. As the HIPP 1 is able to take the initiative to contact the HIPP-C 2, and as in an access network 5, the HIPP-C 2 might have to deal with hundreds of thousands of HIPPs 1, the HIPP-C 2 is vulnerable to Denial of Service, DoS attacks. A DoS attack is a type of attack on a network that is designed to bring the network to its knees by flooding it with useless traffic. However, according to the state of the art there is no mechanism foreseen to prevent HIPPs 1 to send messages to the HIPP-C 2, meaning that DoS attacks can be generated against the HIPP-C 2.

According to the invention, with the knowledge of the Private IP address and/or the MAC address and/or the DSL line information of the HIPP 1 comprised in the HIPP information, the HIPP-C 2 is enabled to configure layer three filters in the DSLAM 4 or other network elements and to thereby avoid DoS attacks of the different HIPPs 1.

Layer three filters can either be set in the DSLAM 4 if the capability is there or in a layer three network element, such as an IP forwarder provided with the related layer two information.

By setting layer three filters, only the messages coming from a certain DSL line 3 with the corresponding source MAC address will be allowed to go to the IP address of the HIPP-C 2. All the messages with the destination IP address of the HIPP-C 2, that have a non-matching source MAC address with the corresponding DSL line 3 or layer two information (VPNC) will be discarded. This prevents at least a certain kind of DoS attacks.

By doing so, only the messages coming from a certain DSL line with the corresponding source MAC address will be allowed to go to the IP address of the HIPP-C. All the messages with the destination IP address of the HIPP-C, that have a non-matching source MAC address with the corresponding DSL line or layer two information e.g. like VP/VC will be discarded. This prevents a certain kind of DoS attacks.

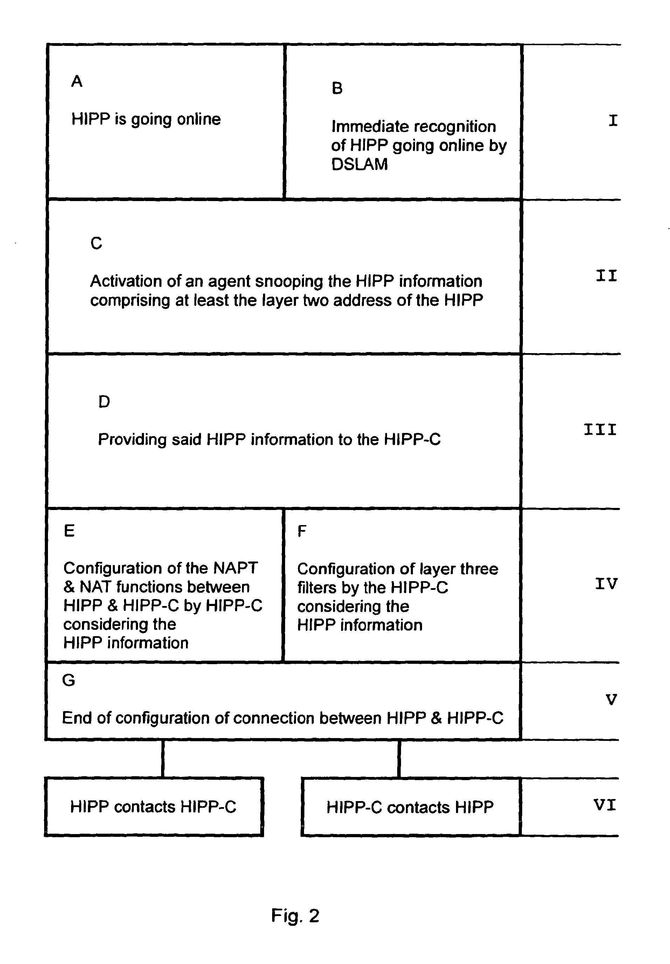

Figure 2 shows a scheme of the procedure of the method according to the invention. In level I the HIPP is going online and the procedure starts. In the same level I the DSLAM recognizes immediately the HIPP going online. In level II an agent is activated for snooping and acquiring the HIPP information comprising at least the level two address of the HIPP. It is thinkable that the agent is snooping the HIPP information from the actual used IP-address assignment protocol such as from the DHCP or PPP protocol. As well for DHCP as for PPP a relay agent can execute this snooping. In level III the HIPP information acquired by the agent is provided to the HIPP-C. After being provided with the HIPP information, in level IV the HIPP-C configures the NAPT and NAT functions between the HIPP and the HIPP-C considering the HIPP information. Parallel to the configuration of the NAPT and NAT functions the HIPP-C in level IV is also configuring layer three filters between the HIPP and the HIPP-C, also considering the HIPP information. Finishing both, the configuration of the NAPT ans NAT functions as well as the layer three filters, the configuration of the connection between the HIPP and the HIPP-C is done in level V. Thereby the acquisition of the HIPP information, their providing to the HIPP-C and also the configuration of the NAPT and NAT functions as well as the configuration of the layer three filters by the HIPP-C takes place before the HIPP tries to contact the HIPP-C.

After this, in level VI both, the HIPP and the HIPP-C can contact each other, wherein both can initialize a communication.

### Commercial applicability:

The invention is commercially applicable particularly in the field of production and operation of Home IP plug controller products and in the field of production and operation of networks providing Home IP Plug Controllers.

### List of reference numerals

- 1: Home Internet Protocol Plug, HIPP
- 2: Home Internet Protocol Plug Controller, HIPP-C
- 3: Digital Subscriber Line, DSL
- 4: Digital Subscriber Line Access Multiplexer, DSLAM
- 5: Access network
- 6: Network Address Port Translation function, NAPT function
- 7: Dynamic Host Configuration Protocol Relay, DHCP Relay
- 8: IP-Edge
- 9: DSL Modem

## Claims

1. Method to configure a connection between at least one Home Internet Protocol Plug (1), HIPP, located at a subscriber side and a Home Internet Protocol Plug Controller (2), HIPP-C, located in an access network, both connected via a Digital Subscriber Line, DSL, a Digital Subscriber Line Access Multiplexer (4), DSLAM, and the access network (5) with each other, wherein at least a Network Address Port Translation function (6), NAPT, and/or at least a Network Address Translation function, NAT, takes place between the HIPP and the HIPP-C
**characterized by** the steps:
- acquisition of a HIPP information when a HIPP (1) is going online, wherein the HIPP information comprises at least a layer two address of the HIPP (1),
- providing said HIPP information to the HIPP-C (2),
- configuration of at least the NAT and/or the NAPT functions between the HIPP (1) and the HIPP-C (2) by the HIPP-C considering said HIPP information, in order to receive a connection in which the HIPP-C (2) is enabled to initialize a communication between the HIPP-C (2) and the HIPP (1),
wherein the acquisition of the HIPP information, their providing to the HIPP-C (2) and also the configuration of the NAT and/or NAPT functions by the HIPP-C takes place before the HIPP tries to contact the HIPP-C.

2. Method according to claim 1,
**characterized in**
**that** the connection is configured in a way that both, the HIPP (1) and the HIPP-C (2) can initialize a communication with each other.

3. Method according to claim 2,
**characterized in**
**that** an initialization of a communication with the HIPP-C (2) is only possible for HIPPs (1) whose HIPP information has been acquired and provided to the HIPP-C(2).

4. Method according to claim 3,
**characterized in**
**that** at least one filter configured by the HIPP-C (2) in consideration of the HIPP information governs the initialization of a communication by the HIPP (1) with the HIPP-C (2).

5. Method according to claim 4,
**characterized in**
**that** the filter is a layer three filter.

6. Method according to claim 5,
**characterized in**
**that** the layer three filter is located in the DSLAM (4).

7. Method according to claim 5,
**characterized in**
**that** the layer three filter is located in a layer three network element.

8. Method according to one of the previous claims,
**characterized in**
**that** the HIPP information comprises at least the Private Internet Protocol Address of the HIPP.

9. Method according to one of the previous claims,
**characterized in**
**that** the layer two address of the HIPP comprises at least the Medium Access Control address of the HIPP.

10. Method according to one of the previous claims,
**characterized in**
**that** at least the layer two address is provided to the HIPP-C (2) by the DSLAM (4).

11. Method according to one of the previous claims,
**characterized in**
**that** the HIPP information comprises at least the related DSL line information.

12. Method according to claim 11,
**characterized in**
**that** at least the DSL line information is provided to the HIPP-C (2) by the DSLAM (4).

## Patentansprüche

1. Verfahren zum Konfigurieren einer Verbindung zwischen mindestens einem Home Internet Protocol Plug HIPP (1), der auf einer Teilnehmerseite angeordnet ist, und einem Home Internet Protocol Plug Controller HIPP-C (2), der in einem Zugangsnetz angeordnet ist, welche beide über eine digitale Teilnehmerleitung (Digital Subscriber Line, DSL) (3), einen Zugangsmultiplexer für eine digitale Teilnehmerleitung (Digital Subscriber Line Access Multiplexer, DSLAM) (4) und das Zugangsnetz (5) miteinander verbunden sind, wobei mindestens eine Netzwerkadressen-Portumsetzungsfunktion (Network Address Port Translation-Funktion, NAPT-Funktion) (6) und/oder mindestens eine Netzwerkadressen-Umsetzungsfunktion (Network Address Translation-Funktion, NAT-Funktion) zwischen dem HIPP und dem HIPP-C stattfindet,
**gekennzeichnet durch** die Schritte,
- eine HIPP-Information zu beschaffen, wenn ein HIPP (1) in den Online-Betrieb wechselt, wobei die HIPP-Information mindestens eine Layer-2-Adresse des HIPPs (1) beinhaltet,
- die besagte HIPP-Information dem HIPP-C (2) zur Verfügung zu stellen,
- eine Konfiguration mindestens den NAT- und/oder NAPT-Funktionen zwischen dem HIPP (1) und dem HIPP-C (2) anhand der besagten HIPP-Information vorzunehmen, um eine Verbindung zu erhalten, innerhalb derer der HIPP-C (2) befähigt ist, eine Kommunikation zwischen dem HIPP-C (2) und dem HIPP (1) zu initialisieren,
wobei die Erfassung der HIPP-Information, ihre Bereitstellung gegenüber dem HIPP-C (2) und auch die Konfiguration der NAT- und/oder NAPT-Funktionen **durch** den HIPP-C stattfinden, bevor der HIPP versucht, Kontakt zum HIPP-C aufzunehmen.

2. Verfahren gemäß Anspruch 1,
**dadurch gekennzeichnet,**
**daß** die Verbindung so konfiguriert wird, daß der HIPP (1) und der HIPP-C (2) eine Kommunikation miteinander initialisieren können.

3. Verfahren gemäß Anspruch 2,
**dadurch gekennzeichnet,**
**daß** eine Initialisierung einer Kommunikation mit dem HIPP-C (2) nur für HIPPs (1) möglich ist, deren HIPP-Information beschafft und dem HIPP-C (2) zur Verfügung gestellt wurde.

4. Verfahren gemäß Anspruch 3,
**dadurch gekennzeichnet,**
**daß** mindestens ein vom HIPP-C (2) anhand der HIPP-Information konfiguriertes Filter die Initialisierung einer Kommunikation durch den HIPP (1) mit dem HIPP-C (2) bestimmt.

5. Verfahren gemäß Anspruch 4,
**dadurch gekennzeichnet,**
**daß** das Filter ein Layer-3-Filter ist.

6. Verfahren gemäß Anspruch 5,
**dadurch gekennzeichnet,**
**daß** das Layer-3-Filter im DSLAM (4) angeordnet ist.

7. Verfahren gemäß Anspruch 5,
**dadurch gekennzeichnet,**
**daß** das Layer-3-Filter in einem Layer-3-Netzelement angeordnet ist.

8. Verfahren gemäß einem der vorgenannten Ansprüche,
**dadurch gekennzeichnet,**
**daß** die HIPP-Information mindestens die private Internetprotokoll-Adresse des HIPPs beinhaltet.

9. Verfahren gemäß einem der vorgenannten Ansprüche,
**dadurch gekennzeichnet,**
**daß** die Layer-2-Adresse des HIPPs mindestens die Medium Access Control-Adresse des HIPPs beinhaltet.

10. Verfahren gemäß einem der vorgenannten Ansprüche,
**dadurch gekennzeichnet,**
**daß** dem HIPP-C (2) mindestens die Layer-2-Adresse vom DSLAM (4) zur Verfügung gestellt wird.

11. Verfahren gemäß einem der vorgenannten Ansprüche,
**dadurch gekennzeichnet,**
**daß** die HIPP-Information mindestens die zugehörige DSL-Leitungsinformation beinhaltet.

12. Verfahren gemäß Anspruch 11,
**dadurch gekennzeichnet,**
**daß** dem HIPP-C (2) mindestens die DSL-Leitungsinformation vom DSLAM (4) zur Verfügung gestellt wird.

## Revendications

1. Procédé destiné à configurer une connexion entre au moins une fiche domestique au protocole Internet (1), HIPP, située du côté d'un abonné et un contrôleur de fiches domestiques au protocole Internet (2), HIPP-C, situé dans un réseau d'accès, les deux étant connectés par l'intermédiaire d'une ligne numérique d'abonné, DSL, d'un multiplexeur d'accès de ligne numérique d'abonné (4), DSLAM et du réseau d'accès (5), l'un avec l'autre, dans lequel au moins une fonction de traduction de port d'adresse de réseau (6), NAPT, et/ou au moins une fonction de traduction d'adresse de réseau, NAT, prend place entre la fiche HIPP et le contrôleur HIPP-C
**caractérisé par** les étapes :
- d'acquisition d'informations sur la fiche HIPP lorsqu'une fiche HIPP (1) se connecte, dans laquelle les informations de fiche HIPP comprennent au moins une adresse de couche deux de la fiche HIPP (1),
- de fourniture desdites informations de fiche HIPP au contrôleur HIPP-C (2)
- de configuration d'au moins les fonctions NAT et/ou NAPT entre la fiche HIPP (1) et le contrôleur HIPP-C (2) par le contrôleur HIPP-C en considérant lesdites informations de fiche HIPP, afin de recevoir une connexion dans laquelle le contrôleur HIPP-C (2) est autorisé à initialiser une communication entre le contrôleur HIPP-C (2) et la fiche HIPP (1),
dans lequel l'acquisition des informations de fiche HTPP, leur fourniture au contrôleur HIPP-C (2) et également la configuration des fonctions NAT et/ou NAPT par le contrôleur HIPP-C a lieu avant que la fiche HIPP essaie d'entrer en contact avec le contrôleur HIPP-C.

2. Procédé selon la revendication 1,
**caractérisé en ce que**
la connexion est configurée de manière telle qu'à la fois la fiche HIPP (1) et le contrôleur HIPP-C (2) peuvent initialiser une communication l'un avec l'autre.

3. Procédé selon la revendication 2,
**caractérisé en ce que**
une initialisation de communication avec le contrôleur HIPP-C (2) n'est possible que pour des fiches HIPP (1) dont les informations de fiche HIPP ont été acquises et fournies au contrôleur HIPP-C (2).

4. Procédé selon la revendication 3,
**caractérisé en ce que**
au moins un filtre configuré par le contrôleur HIPP-C (2) en considérant les informations de fiche HIPP gère l'initialisation d'une communication par la fiche HIPP (1) avec le contrôleur HIPP-C (2).

5. Procédé selon la revendication 4,
**caractérisé en ce que**
le filtre est un filtre de couche trois.

6. Procédé selon la revendication 5,
**caractérisé en ce que**
le filtre de couche trois est situé dans le multiplexeur DSLAM (4).

7. Procédé selon la revendication 5,
**caractérisé en ce que**
le filtre de couche trois est situé dans un élément de réseau à trois couches.

8. Procédé selon l'une des revendications précédentes,
**caractérisé en ce que**
les informations de fiche comprennent au moins l'adresse privée au protocole Internet de la fiche HIPP.

9. Procédé selon l'une des revendications précédentes,
**caractérisé en ce que**
l'adresse de couche deux de la fiche HIPP comprend au moins l'adresse de commande d'accès au support de la fiche HIPP.

10. Procédé selon l'une des revendications précédentes,
**caractérisé en ce que**
au moins l'adresse de couche deux est fournie au contrôleur HIPP-C (2) par le multiplexeur DSLAM (4).

11. Procédé selon l'une des revendications précédentes,
**caractérisé en ce que**
les informations de fiche HIPP comprennent au moins les informations de ligne DSL liées.

12. Procédé selon la revendication 11,
**caractérisé en ce que**
au moins les informations de ligne DSL sont fournies au contrôleur HIPP-C (2) par le multiplexeur DSLAM (4).
